# EUROPÄISCHE PATENTSCHRIFT

(11) **EP 2 263 399 B1**
(45) Veröffentlichungstag und Bekanntmachung des Hinweises auf die Patenterteilung: **17.12.2014**
(21) Anmeldenummer: 09727720.6
(22) Anmeldetag: 23.03.2009
(51) Int. Cl.: H04W 28/16, H04L 12/26, H04W 24/08, H04L 12/801, H04L 12/813, H04L 12/841

(54) **VERFAHREN UND KOMMUNIKATIONSSYSTEM ZUM BESTIMMEN DER QUALITÄT WENIGSTENS EINER IP-VERBINDUNG ZWISCHEN EINER MOBILEN EINRICHTUNG UND EINEM MIT EINEM ÖFFENTLICHEN IP-BASIERTEN KOMMUNIKATIONSNETZ VERBUNDENEN SERVER**
METHOD AND COMMUNICATION SYSTEM FOR DETERMINING THE QUALITY OF AT LEAST ONE IP CONNECTION BETWEEN A MOBILE DEVICE AND A SERVER CONNECTED TO A PUBLIC IP BASED COMMUNICATION NETWORK
PROCÉDÉ ET SYSTÈME DE COMMUNICATION POUR LA DÉTERMINATION DE LA QUALITÉ D'AU MOINS UNE LIAISON IP ENTRE UN DISPOSITIF MOBILE ET UN SERVEUR LIÉ AVEC UN RÉSEAU DE COMMUNICATION PUBLIC À BASE IP

(30) Priorität: 31.03.2008 DE 102008016720
(43) Veröffentlichungstag der Anmeldung: 22.12.2010
(73) Patentinhaber: Deutsche Telekom AG, 53113 Bonn (DE)
(72) Erfinder: KILB, Sascha, 67240 Bobenheim-Roxheim (DE); BELSCHNER, Jakob, 65934 Frankfurt am Main (DE)
(74) Vertreter: Blumbach Zinngrebe
(86) Internationale Anmeldenummer: PCT/DE2009/000398
(87) Internationale Veröffentlichungsnummer: WO 2009/121329

(56) Entgegenhaltungen:
- EP-A1- 1 848 152
- US-B1- 6 363 056
- WAKIKAWA R; ET AL: "ENHANCED MOBILE NETWORK PROTOCOL FOR ITS ROBUSTNESS AND POLICY BASED ROUTING" IEICE TRANSACTIONS ON COMMUNICATIONS, COMMUNICATIONS SOCIETY, TOKYO, JP, Bd. E87B, Nr. 3, 1. März 2004 (2004-03-01) , Seiten 445-457, XP001503178 ISSN: 0916-8516
- Te-Chih Wang, Chia-Hui Wang: "A QoS Improvement for Mobile Network in Large Vehicles" JCIS-2006 Proceedings 31. Oktober 2006 (2006-10-31), XP002543973 Gefunden im Internet: URL:http://www.atlantis-press.com/publicat ions/aisr/jcis-06/index_jcis.html?http%3A/ /www.atlantis-press.com/php/paper-details. php%3Ffrom%3Dauthor+index%26id%3D88%26quer ystr%3Dauthorstr%253DW%2526publication%253 Djcis2006> [gefunden am 2009-08-31]
- Quickenborne, De Greve, De Turck, Moerman, Demeester: "A Tunnel-based QoS Management Framework for Delivering Broadband Internet on Trains" Lecture Notes in Computer Science 7. November 2006 (2006-11-07), XP002543974 Gefunden im Internet: URL:http://www.springerlink.com/content/f7 3543t815844214/fulltext.pdf> [gefunden am 2009-09-01]

## Beschreibung

Die Erfindung betrifft im Allgemeinen ein System zum Bewerten der Qualität drahtloser Datenkanäle von und zu Fahrzeugen unter Verwendung von IP-Netzwerktunnel und insbesondere ein Verfahren zum Bestimmen der Qualität wenigstens einer IP-Verbindung zwischen einer mobilen Einrichtung und einem mit einem öffentlichen IP-basierten Kommunikationsnetz verbundenen Server, wobei die IP-Verbindung abschnittsweise über eine Funkverbindung eines Mobilfunknetzes verläuft, über welches die mobile Einrichtung am öffentlichen IP-basierten Kommunikationsnetz angebunden wird. Darüber hinaus betrifft die Erfindung ein Kommunikationssystem, welches insbesondere zur Ausführung des Verfahrens ausgebildet ist.

In Zukunft wird das Interesse von Fahrgästen immer mehr zunehmen, während der Fahrt, zum Beispiel in einem Zug oder einem Bus, mit Teilnehmern eines öffentlichen IP-Netzes, insbesondere das Internet, kommunizieren zu können.

Aus der noch nicht veröffentlichten DE 10 2007 035 391 ist ein Verfahren bekannt, nach dem ein mobiler Knoten Datenpakete über mehrere Netzwerk-Funkschnittstellen unter Berücksichtigung der Verbindungsqualität verfügbarer Kommunikationsverbindungen mit einem Kommunikations-Verwaltungsserver austauschen kann, der mit dem Internet verbunden ist.

In "Enhanced Mobile Network Protocol for Its Robustness and Policy Based Routing" von R. Wakikawa et al., IEICE Transactions on Communications, Bd. E87B, Nr. 3, 1. März 2004, wird ein Verfahren zum Ermitteln der Leistungsfähigkeit eines mobilen Netzwerks beschrieben, wobei ein bi-direktionaler Tunnel für die Kommunikation zwischen dem mobilen Netzwerk und dem Internet bereitgestellt wird, und wobei als Bewertungskriterien Verzögerung, Durchsatz und Latenz betrachtet werden.

Aus "A QoS Improvement for Mobile Network in Large Vehicles" von Te-Chih Wang und Chia-Hui Wang, JCIS-2006 Proceedings, 31. Oktober 2006, ist eine Möglichkeit zur Verbesserung der Übertragungsqualität für ein mobiles Netzwerk in großen Fahrzeugen, bei der eine Vorhersage der Übertragungsqualität eines solchen Netzwerkes aufgrund eines festen und vorhersagbaren Weges des Fahrzeuges ermöglicht wird.

In EP 1 848 152 A1 wird ein Verfahren zur Messung eines MPLS-Netzwerkes beschrieben. Multiprotocol Label Switching (MPLS) ermöglicht die verbindungsorientierte Übertragung von Datenpaketen in einem verbindungslosen entlang einem zuvor aufgebauten Pfad.

In US 6 363 056 B1 wird ein Verfahren zum kontinuierlichen Überwachen der Netzwerkleistung in einer Intranet- oder Internet-Topologie mit geringem Overhead beschrieben, wobei Testpakete von einem ersten zu einem zweiten Zugangs-Router übertragen werden, die durch Kopieren jedes n-ten Datenpakets erzeugt werden. Aus der Differenz des Empfangszeitpunktes eines Testpakets und eines im Testpaket enthaltenen Zeitstempels kann die Netzwerkverzögerung ermittelt werden, sowie durch Zurückübertragen des Testpakets auch die Round-Trip-Time. Ferner kann mittels der Testpakete eine Bandbreiten- und Fehlerüberwachung erfolgen, wobei zur Fehlerüberwachung die Anzahl empfangener Testpakete und tatsächlicher Datenpakete verglichen wird.

Der Erfindung liegt die Aufgabe zugrunde, ein Verfahren und ein Kommunikationssystem zur Verfügung zu stellen, mit denen die Qualität einer abschnittsweise über ein Mobilfunknetz geführten Ende-zu-Ende-IP-Verbindung bestimmt werden kann.

Ein Kerngedanke der Erfindung ist darin zusehen, zwischen einer mobilen Einrichtung und einem an einem IP-basierten Kommunikationsnetz angeschlossenen Server wenigstens einen Netzwerktunnel aufzubauen, über den unter Steuerung des User Datagram Protocols (UDP) der Schicht 4 des OSI-Schichtenmodells Tunnelpakete übertragen werden. Eine in der mobilen Einrichtung und/oder dem Server implementierte Tunnelsoftware hat Zugriff auf alle über den Netzwerktunnel übertragenen Tunnelpakete, um Qualitätsparameter hinsichtlich des Netzwerktunnels zu ermitteln. Um die Qualitätsparameter ermitteln zu können, muss die Tunnelsoftware in der Lage sein, die Round-Trip-Time hinsichtlich der zugrundeliegenden IP-Verbindung zu messen. Die Round-Trip-Time berechnet sich im einfachsten Fall aus der Zeit, die vom Absenden eines Pakets bis zum Eintreffen der Empfangsbestätigung vergeht.

Das oben genannte technische Problem wird durch ein Verfahren zum Bestimmen der Qualität wenigstens einer IP-Verbindung zwischen einer mobilen Einrichtung und einem mit einem öffentlichen IP-basierten Kommunikationsnetz verbundenen Server gelöst, wobei die IP-Verbindung abschnittsweise über eine Funkverbindung eines Mobilfunknetzes verläuft, über welches die mobile Einrichtung am öffentlichen IP-basierten Kommunikationssystem angebunden wird. Danach wird wenigstens eine IP-Verbindung zwischen der mobilen Einrichtung und dem Server hergestellt. Unter Anwendung einer vorbestimmten Tunnelsoftware wird eine Tunnelverbindung über die IP-Verbindung aufgebaut. IP-basierte Tunnelpakete werden unter Steuerung des User Datagram Protocols über die Tunnelverbindung zwischen der mobilen Einrichtung und dem Server ausgetauscht. An der mobilen Einrichtung und/oder dem Server werden auf Basis einer Pakethistorie gesendeter und empfangener Tunnelpakete durch die Tunnelsoftware Qualitätsparameter ermittelt, die die maximale Übertragungsrate, die Round-Trip-Time und ein Maß für den Paketverlust hinsichtlich der IP-Verbindung darstellen. In Abhängigkeit von den Qualitätsparametern wird durch die Tunnelsoftware die Qualität der IP-Verbindung bestimmt, wobei die Qualität der IP-Verbindung durch die Tunnelsoftware kontinuierlich überwacht wird, wofür Nutzdaten in die Tunnelpakete eingebettet werden, sobald Nutzdaten in der mobilen Einrichtung bzw. im Server zur Übertragung verfügbar sind, und für den Fall, dass keine Nutzdaten verfügbar sind, anstelle von Nutzdaten Testdaten in die Tunnelpakete eingebettet werden.

Bei dem Mobilfunknetz kann es sich um ein privates oder öffentliches Mobilfunknetz handeln.

Bei der mobilen Einrichtung handelt es sich vorzugsweise um ein Fahrzeug, beispielsweise einen Bus oder einen Zug.

Angemerkt sei, dass es sich bei den Qualitätsparametern um Parameter handelt, die eine Aussage über die Qualität einer Ende-zu-Ende-Verbindung, d. h. der IP-Verbindung zwischen der mobilen Einrichtung und dem Server zulassen.

Eine hohe Qualität der IP-Verbindung ergibt sich dann, wenn für die IP-Verbindung zwischen der mobilen Einrichtung und dem Server ein hoher Datendurchsatz bei einer niedrigen Round-Trip-Time und einem niedrigen Paketverlust ermittelt worden ist. In diesem Fall eignet sich die IP-Verbindung für eine schnelle und breitbandige Übertragung von Daten.

Um die Qualitätsparameter für die IP-Verbindung ermitteln zu können, kann das Verfahren folgende Schritte umfassen:
Speichern der Sendezeit und der Paketidentifikation eines ersten Tunnelpakets in der mobilen Einrichtung; Übertragen des ersten Tunnelpakets zum Server; Speichern der Empfangszeit des empfangenen ersten Tunnelpakets im Server;
Übertragen eines zweiten Tunnelpakets vom Server zur mobilen Einrichtung, welches wenigstens eine Empfangsbestätigung des ersten Tunnelpakets und eine Zeitangabe enthält, die die zeitliche Differenz zwischen der Empfangszeit des ersten Tunnelpakets und der Sendezeit des zweiten Tunnelpakets darstellt;
Speichern der in dem empfangenen zweiten Tunnelpaket enthaltenen Empfangsbestätigung und der dazugehörenden Zeitangabe sowie der Empfangszeit des zweiten Tunnelpakets in der mobilen Einrichtung.

Auf diese Weise kann in der mobilen Einrichtung eine Pakethistorie hinsichtlich aller von der mobilen Einrichtung zum Server gesendeten Tunnelpakete erstellt werden, welche zur Ermittlung der Qualitätsparameter erforderlich ist.

Um beispielsweise die aktuelle Round-Trip-Time der IP-Verbindung in der mobilen Einrichtung zu ermitteln, wird in Abhängigkeit von der Sendezeit des ersten Tunnelpakets, der Empfangszeit des zweiten Tunnelpakets, in dem die Empfangsbestätigung des ersten Tunnelpakets und die entsprechende Zeitangabe enthalten ist, und der entsprechenden Zeitangabe die Round-Trip-Time ermittelt.

Gemäß einer vorteilhaften Weiterbildung kann die Round-Trip-Time auch im Server ermittelt werden. Hierzu umfasst das Verfahren folgende Schritte:
Speichern der Sendezeit und der Paketidentifikation eines dritten Tunnelpakets im Server;
Übertragen des dritten Tunnelpakets zur mobilen Einrichtung;
Speichern der Empfangszeit des empfangenen dritten Tunnelpakets in der mobilen Einrichtung;
Übertragen eines vierten Tunnelpakets von der mobilen Einrichtung zum Server, welches wenigstens die Empfangsbestätigung des dritten Tunnelpakets und eine Zeitangabe enthält, die die zeitliche Differenz zwischen der Empfangszeit des dritten Tunnelpakets und der Sendezeit des vierten Tunnelpakets darstellt;
Speichern der in dem empfangenen vierten Tunnelpaket enthaltenen Empfangsbestätigung und der dazugehörenden Zeitangabe sowie der Empfangszeit des vierten Tunnelpakets im Server.

Die Round-Trip-Time der IP-Verbindung kann nunmehr im Server in Abhängigkeit von der Sendezeit des dritten Tunnelpakets, der Empfangszeit des vierten Tunnelpakets, in welchem die Empfangsbestätigung des dritten Tunnelpakets und die entsprechende Zeitangabe enthalten ist, und dieser Zeitangabe ermittelt werden.

Die maximal verfügbare Bitrate, auch Datendurchsatz der IP-Verbindung genannt, kann dadurch ermittelt wird, dass die minimale Round-Trip-Time ermittelt wird, und dass die Anzahl von übertragenen Tunnelpaketen pro Zeiteinheit solange verändert wird, bis die aktuell gemessene Round-Trip-Time gleich oder im Wesentlichen gleich einem vorgegebenen Schwellenwert ist, wobei die Anzahl pro Zeiteinheit übertragener Tunnelpakete ein Maß für die verfügbare Bitrate der IP-Verbindung ist.
Gemäß einer bevorzugten Ausführungsform wird zur Ermittlung des Paketverlusts in der mobilen Einrichtung innerhalb eines vorbestimmten Zeitintervalls die Anzahl von ersten Paketen ermittelt, deren Empfangsbestätigungen nicht innerhalb einer vorbestimmten Zeitspanne vom Server empfangen worden sind.

Optional oder zusätzlich kann der Paketverlust auch im Server bestimmt werden, indem innerhalb eines vorbestimmten Zeitintervalls die Anzahl von dritten Paketen ermittelt wird, deren Empfangsbestätigungen nicht innerhalb einer vorbestimmten Zeitspanne von der mobilen Einrichtung empfangen worden sind.

Um eine effiziente Datenübertragung über die IP-Verbindung sicherstellen zu können, werden das erste und vierte Tunnelpaket sowie das zweite und dritte Tunnelpaket erst dann übertragen, wenn Nutzdaten in der mobilen Einrichtung beziehungsweise im Server zur Übertragung verfügbar sind. Auf diese Weise wird vermieden, dass für jede Empfangsbestätigung ein separates Tunnelpaket erzeugt und übertragen werden muss.

Da sich die Qualität der IP-Verbindung insbesondere durch die Einbindung eines Mobilfunksystems rasch ändern kann, ist es zweckmäßig, die Qualitätsparameter kontinuierlich zu ermitteln.

Hierzu bietet es sich an, die Auslastung der IP-Verbindung hinsichtlich der Übertragung von Nutzdaten zu ermitteln und in Abhängigkeit vom Grad der Auslastung Tunnelpakete mit Testdaten zu übertragen. Insbesondere die Ermittlung der maximalen Bitrate verlangt eine maximale Auslastung der IP-Verbindung. Das bedeutet, dass Tunnelpakete mit Testdaten erzeugt werden, sobald die Menge an zu übertragenden Nutzdaten nicht ausreicht, die IP-Verbindung maximal auszulasten.

Um eine Datenübertragung während der kontinuierlichen Messung von Qualitäts-Parametern effizient gestalten zu können, können in einem vom Server gesendeten zweiten Tunnelpaket und/oder in einem von der mobilen Einrichtung gesendeten vierten Tunnelpaket die Empfangsbestätigung und die Zeitangabe hinsichtlich mehrerer erster beziehungsweise dritter Tunnelpakete übertragen werden.

Ist die mobile Einrichtung über verschiedene Mobilfunknetze an dem IP-basierten Kommunikationsnetz angebunden und bestehen mehrere IP-Verbindungen zwischen der mobilen Einrichtung und dem Server, so kann die Qualität jeder IP-Verbindung bestimmt werden. Die von der mobilen Einrichtung zu übertragenden Nutzdaten können dann über die IP-Verbindung, die die höchste Qualität aufweist, übertragen werden.

Angemerkt sei, dass die in der mobilen Einrichtung ermittelten Qualitätsparameter und/oder andere Zustandsparameter in Tunnelpaketen zum Server und die im Server ermittelten Qualitätsparameter und/oder andere Zustandsparameter in Tunnelpaketen zur mobilen Einrichtung übertragen werden können.

Aufgrund dieses Verfahrens ist es möglich, die Qualitätsparameter wenigstens einer IP-Verbindung zwischen der mobilen Einrichtung und dem Server automatisch und kontinuierlich zu ermitteln. Gleichzeitig ermöglicht das Verfahren, dass der Verkehr von Nutzdaten auf der IP-Verbindung während der Messung der Qualitätsparametern nicht behindert wird.

Das oben genannte technische Problem wird ebenfalls durch ein Kommunikationssystem zum Bestimmen der Qualität wenigstens einer IP-Verbindung zwischen einer mobilen Einrichtung und einem mit einem öffentlichen IP-basierten Kommunikationsnetz verbundenen Server gelöst.

Das Kommunikationssystem umfasst wenigstens eine mobile Einrichtung, die wenigstens eine Netz-Funkschnittstelle zur Kommunikation mit wenigstens einem Mobilfunknetz aufweist. Wenigstens ein Mobilfunknetz ist vorgesehen, über das die mobile Einrichtung mit einem öffentlichen IP-basierten Kommunikationsnetz, vorzugsweise das Internet, verbindbar ist. Weiterhin weist das Kommunikationssystem einen mit dem IP-basierten Kommunikationsnetz verbundenen, Netzwerktunnel-fähigen Server auf. Die mobile Einrichtung und/oder der Server weisen jeweils einen programmierbaren Mikroprozessor auf. Der Mikroprozessor ist derart ausgebildet, dass er unter Ansprechen auf eine Tunnelsoftware das Herstellen einer Tunnelverbindung zum Server bzw. zur mobilen Einrichtung steuert, Tunnelpakete über eine hergestellte Tunnelverbindung senden und empfangen kann, und auf Basis einer Pakethistorie gesendeter und empfangener Tunnelpakete Qualitäts-Parameter und in Abhängigkeit von den Qualitäts-Parametern die Qualität der IP-Verbindung bestimmen kann, wobei die Tunnelsoftware dazu ausgebildet ist, die Qualität der IP-Verbindung kontinuierlich zu überwachen, und wobei die Tunnelsoftware dazu ausgebildet ist, Tunnelpakete derart zu erzeugen, dass Nutzdaten in die Tunnelpakete eingebettet werden, sobald Nutzdaten in der mobilen Einrichtung bzw. im Server zur Übertragung verfügbar sind, und wobei für den Fall, dass keine Nutzdaten verfügbar sind, anstelle von Nutzdaten Testdaten in die Tunnelpakete eingebettet werden.

In vorteilhafter Weise weist die mobile Einrichtung einen Speicher zum Speichern der Sendezeit und der Paketidentifikation wenigstens eines gesendeten ersten Tunnelpakets und zum Speichern der in einem vom Server gesendeten zweiten Tunnelpaket enthaltenen Empfangszeit der Empfangsbestätigung des ersten Tunnelpakets und einer Zeitangabe, welche die zeitliche Differenz zwischen der Empfangszeit des ersten Tunnelpakets und der Sendezeit des zweiten Tunnelpakets darstellt, auf. Weiterhin ist der Mikroprozessor ausgebildet, die Round-Trip-Time, und/oder die maximale Bitrate der IP-Verbindung und/oder die Anzahl verlorengegangener Tunnelpakete zu ermitteln.

Die Erfindung wird nachfolgend anhand eines Ausführungsbeispiels in Verbindung mit den beiliegenden Zeichnungen näher erläutert. Es zeigen:
- Fig. 1: das Blockschaltbild eines beispielhaften Kommunikationssystems, in welchem die Erfindung verwirklicht wird,
- Fig. 2: den zeitlichen Ablauf der Übertragung von Tunnelpaketen zur Ermittlung der Round-Trip-Zeit,
- Fig. 3: das in Fig. 2 gezeigte Tunnelpaket Y und
- Fig. 4: das in Fig. 2 gezeigte Tunnelpaket X.

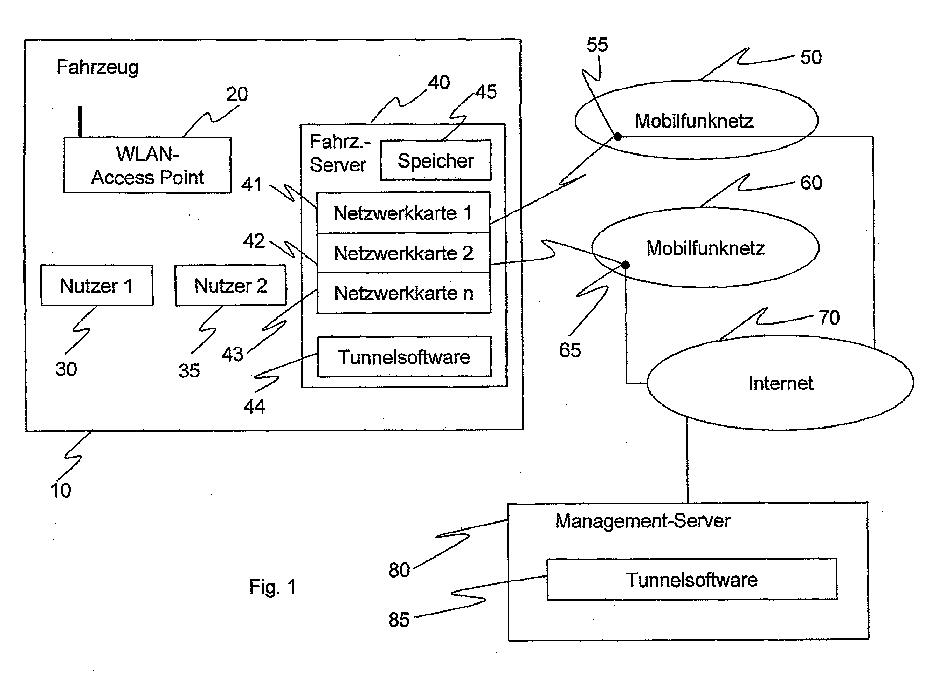

Fig. 1 zeigt ein beispielhaftes Kommunikationssystem, mit dem Nutzern 30, 35 eines Fahrzeugs, im vorliegenden Beispiel eines Busses 10, ein Internet-Zugang über ein WLAN (wireless local area network), das heißt ein sogenannter Hotspot angeboten werden kann. Angenommen sei, dass den Nutzern 30 und 35 jeweils ein Notebook zugeordnet ist. Über einen WLAN access point 20, auch drahtloser Zugangspunkt genannt, können die Nutzer 30 und 35 über ihre Notebooks mit einem im Fahrzeug 10 installierten Computer, dem Fahrzeugserver 40, eine Verbindung aufnehmen. Der Fahrzeugserver 40 weist im vorliegenden Beispiel drei Funk-Netzwerkkarten 41, 42 und 43 auf, die jeweils mit einem separaten Mobilfunknetz kommunizieren können. Lediglich der einfachen Darstellung wegen sind nur zwei Mobilfunknetze 50 und 60 dargestellt. Das Mobilfunknetz 50 basiert beispielsweise auf dem GSM-Standard, während das Mobilfunknetz 60 beispielsweise auf dem UMTS-Standard basiert. Im vorliegenden Beispiel sind lediglich die beiden Funk-Netzwerkkarten 41 und 42 aktiv. Im dargestellten Augenblick besteht eine Funkverbindung zwischen der Funk-Netzwerkkarte 41 und einer Basisstation 55 des Mobilfunknetzes 50 sowie eine Funkverbindung zwischen der Funk-Netzwerkkarte 42 und einer Basisstation 65 des Mobilfunknetzes 60. Über diese Funkverbindungen wird das Fahrzeug 10 am Internet 70 angebunden. Mit dem Internet 70 ist ein Management-Server 80 verbunden, der, wie nachfolgend noch erläutert wird, mit dem Fahrzeugserver 40 des Fahrzeugs 10 über mehrere IP-basierte Netzwerktunnel kommunizieren kann. Hierzu ist im Fahrzeugserver 40 eine Tunnelsoftware 44 implementiert, die in Verbindung mit einer auf dem Management-Server implementierten Tunnelsoftware 85 über bestehende IP-Verbindungen Netzwerktunnel aufbauen kann. Weiterhin weist der Fahrzeugserver 40 einen programmierbaren Mikroprozessor (nicht dargestellt) auf, der unter Steuerung der Tunnelsoftware 44 Qualitäts-Parameter hinsichtlich der zwischen dem Fahrzeugserver 40 und dem Management-Server 80 aufgebauten Netzwerktunnel oder IP-Verbindungen ermitteln kann. Die zur Ermittlung der Qualitätsparameter erforderlichen Daten sowie die Qualitätsparameter selbst können in einem Speicher 45 abgelegt werden. Auch die Tunnelsoftware 85 ist in der Lage, Qualitätsparameter der IP-Verbindungen zu ermitteln. Aus den Qualtitätsparametern kann dann die Qualität der jeweiligen IP-Verbindung bestimmt werden. Die Tunnelsoftware 44 und/oder die Tunnelsoftware 85 ist weiterhin in der Lage, aus mehreren zwischen dem Fahrzeugserver 40 und dem Management-Server 80 aufgebauten IP-Verbindungen die IP-Verbindung mit der höchsten Qualität auszuwählen und Nutzdaten dann ausschließlich oder bevorzugt über diese IP-Verbindung zu übertragen.

Angemerkt sei an dieser Stelle, dass vorzugsweise alle vom Server 40 und/oder den Nutzern 30, 35 für einen Internet-Teilnehmer (nicht dargestellt) bestimmten IP-Pakete über den Management-Server 80 zum Internet-Teilnehmer weitergeleitet werden und alle von einem Internet-Teilnehmer für den Server 40 und/oder den Nutzern 30, 35 bestimmte IP-Pakete über den Management-Server 80 zum Server 40 übertragen werden. Sofern der Management-Server 80 über ein NAT (network address translation)- Gateway verfügt, kann eine nahtlose Datenübertragung zwischen dem Fahrzeugserver 40 und einem Internet-Teilnehmer gewährleistet werden, auch wenn eine Funkverbindung ausfallen sollte. In diesem Fall ist dem Management-Server 80 eine feste öffentliche IP-Adresse zugeordnet, an die für den Fahrzeugserver 40 bzw. den Nutzer 30, 35 bestimmte IP-Pakete zunächst übertragen werden.

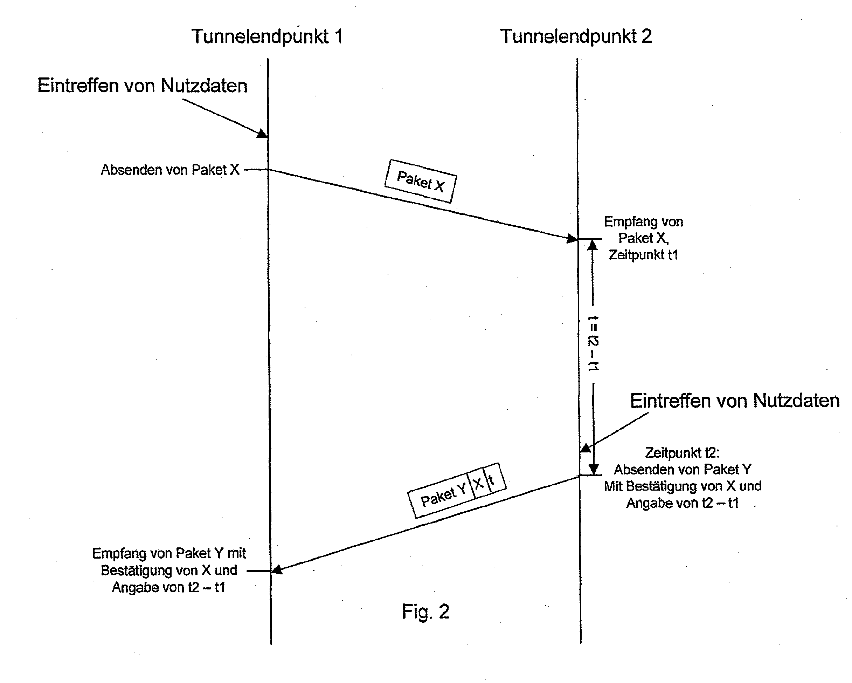

Die Funktionsweise des in Fig. 1 gezeigten Kommunikationssystems wird nachfolgend in Verbindung mit den Fig. 2 bis 4 näher erläutert.

Angenommen sei zunächst, dass der Fahrzeugserver 40 über die Funk-Netzwerkkarten 41 und 42 zwei IP-Verbindungen zum Management-Server 80 aufgebaut hat. Hierbei verläuft die eine IP-Verbindung abschnittsweise über eine Funkverbindung zwischen der Funk-Netzwerkkarte 41 und der Basisstation 55 und die andere IP-Verbindung abschnittweise über eine Funkverbindung zwischen der Funk-Netzwerkkarte 42 und der Basisstation 65. Der Fahrzeugserver 40 und dessen Nutzer 30, 35 sind auf diese Weise über die beiden Mobilfunknetze 50 und 60 an das Internet 70 angebunden. Die beiden IP-Verbindungen werden dann durch das Internet 70 zum Management-Server 80 geleitet.

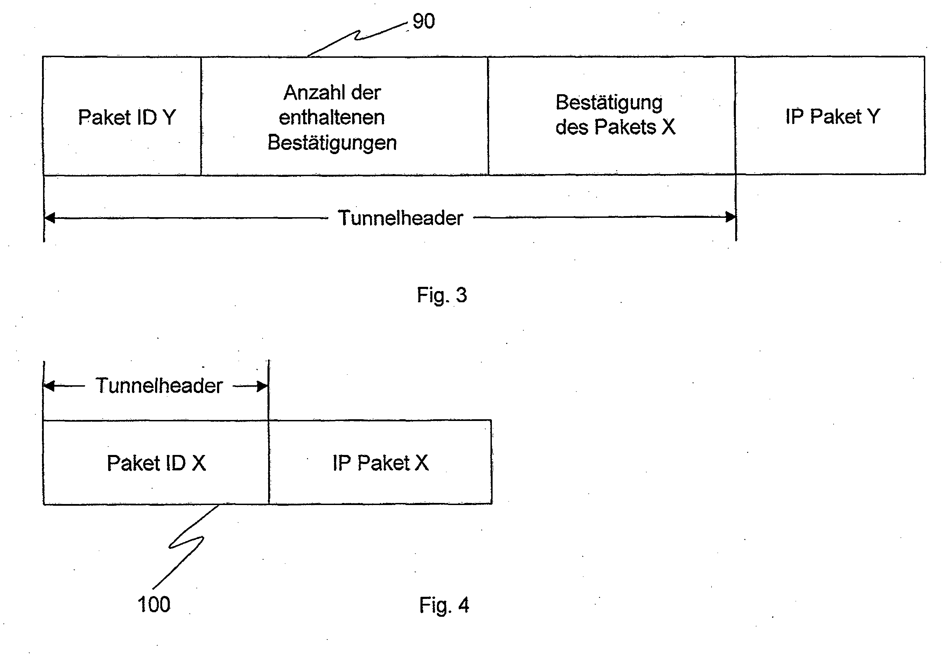

Um eine Aussage über die Qualität der beiden IP-Verbindungen treffen zu können, werden Qualitäts-Parameter ermittelt, die sich auf eine Ende-zu-Ende-Verbindung beziehen, wobei der Server 40 und der Management-Server 80 die beiden Endpunkte bilden. Eine kontinuierliche und dynamische Ermittlung der Qualität der IP-Verbindungen ist möglich, wenn für jede aufgebaute IP-Verbindung ein Netzwerktunnel hergestellt wird. Mit Hilfe der im Server implementierten Tunnelsoftware 44 und der im Management-Server 80 implementierten Tunnelsoftware 85 können solche Netzwerktunnel aufgebaut werden. Netzwerktunnel, wie zum Beispiel die Software openVPN sind allgemein bekannt. Bei einem Netzwerktunnel handelt es sich um eine virtuelle Netzwerkverbindung zwischen zwei Computern, im vorliegenden Beispiel zwischen dem Server 40 und dem Management-Server 80. Die auf dem Server 40 implementierte Tunnelsoftware 44 und die auf dem Management-Server 80 implementierte Tunnelsoftware 85 erzeugen jeweils eine virtuelle Netzwerkkarte, die die in Fig. 3 und 4 dargestellten Tunnelpaket erzeugen können.

Wie Fig. 4 zeigt, kann jede Tunnelsoftware ein Tunnelpaket 100 erzeugen, dass einen Tunnelheader und ein Datenfeld zur Übertragung eines IP-Pakets X aufweist. In den Tunnelheader wird eine individuelle Paketidentifizierung X eingetragen, die das Tunnelpaket identifiziert. Ferner steht im Tunnelheader, ob im folgenden Datenfeld Nutzdaten (dargestellt durch das IP-Paket X in Fig. 4), Testdaten oder keine Daten enthalten sind.

Wie Fig. 3 zeigt, kann jede Tunnelsoftware ein Tunnelpaket 90 erzeugen, dass einen Tunnelheader und ein Datenfeld zur Übertragung eines IP-Pakets Y aufweist. In den Tunnelheader wird die Information, ob Nutzdaten, Testdaten oder keine Daten im Datenfeld enthalten sind sowie eine individuelle Paketidentifizierung Y eingetragen, die das Tunnelpaket identifiziert. Daneben wird in den Tunnelheader zumindest die Bestätigung eines empfangenen Tunnelpakets X eingetragen. Werden im Tunnelheader Empfangsbestätigungen mehrerer Tunnelpakete übertragen, wird zusätzlich im Tunnelheader noch die Anzahl der enthaltenen Bestätigungen eingetragen. In dem Tunnelheader kann weiterhin eine Zeitangabe t enthalten sein, die in Verbindung mit Fig. 2 weiter unten näher erläutert wird. In dem Datenfeld können Nutzdaten, Testdaten oder keine Daten stehen.

Tunnelpakete 90 und 100 können sowohl vom Fahrzeugserver 40 zum Management-Server 80 als auch in umgekehrter Richtung übertragen werden.

Nachfolgend wird die Qualitätsbestimmung anhand der Ermittlung von Qualitätsparametern für die zwischen der Funknetzwerkkarte 41 und dem Management-Server 80 hergestellten IP-Verbindung näher erläutert. Dank der eingesetzten Tunnelsoftware 44 und 85 ist es möglich, Qualitäts-Parameter der IP-Verbindung zu messen und gleichzeitig die Übertragung von Nutzdaten zu ermöglichen.

Angenommen sei, dass über diese IP-Verbindung ein Netzwerktunnel hergestellt worden ist. Der Server 40 bildet hierbei den Tunnelendpunkt 1, während der Management-Server 80 den Tunnelendpunkt 2, wie in Fig. 2 gezeigt.

### Ermittlung der Qualitätsparameter

Um die Qualitäts-Parameter der IP-Verbindung bestimmen zu können, müssen Bestätigungsinformationen zwischen dem Server 40 und dem Management-Server 80 ausgetauscht werden. Allgemein versteht man unter einer Bestätigung eine Nachricht eines Empfängers an einen Sender, dass ein Paket erfolgreich empfangen worden ist. Im vorliegenden Beispiel wird zunächst der Fall betrachtet, dass der Fahrzeugserver 40 als Sender und der Management-Server 80 als Empfänger fungiert.

### a) Ermittlung der aktuellen Round-Trip-Time

Angenommen sei der Fall, dass am Server 40 Nutzdaten beispielsweise vom Nutzer 30 eingetroffen sind, die zu einem Internet-Teilnehmer übertragen werden sollen.

Wie Fig. 2 zeigt, erzeugt die Tunnelsoftware 44 unter Ansprechen auf das Vorliegen der Nutzdaten ein Tunnelpaket X, welches die in Fig. 4 gezeigte Struktur aufweist. Mit anderen Worten werden die Nutzdaten oder wenigstens einige der Nutzdaten als IP-Paket X in das Tunnelpaket X eingebettet. Zusätzlich wird im Tunnel-Header die Paketidentifizierung X und eine IP-Adresse des Management-Servers 80 eingetragen. Die Tunnelsoftware 44 veranlasst nunmehr den Fahrzeugserver 40, das Tunnelpaket X über die Funk-Netzwerkkarte 41 zum Management-Server 80 zu übertragen. Ferner sorgt die Tunnelsoftware 44 dafür, dass der Sendezeitpunkt tsx, zu dem das Tunnelpaket X abgesendet worden ist, und die Paketidentifizierung X im Speicher 45 gespeichert werden. Wie in Fig. 2 gezeigt, trifft das Tunnelpaket am Tunnelendpunkt 2, das heißt am Management-Server 80 zum Empfangszeitpunkt t1 ein. Die Tunnelsoftware 85 sorgt dafür, dass die Paketidentifizierung X und der Empfangszeitpunkt t1 in einem Speicher im Management-Server 80 gespeichert werden. Das im Tunnelpaket X enthaltene IP-Paket kann anschließend vom Management-Server zum Zielteilnehmer über das Internet 70 weitergeleitet werden. Sobald am Management-Server 80 Nutzdaten eingetroffen sind, die für den Server 40 bestimmt sind, erzeugt die Tunnelsoftware 85 das in Fig. 3 gezeigte Tunnelpaket Y.

Da im vorliegenden Beispiel nur der Empfang des Tunnelpakets X bestätigt wird, wird das Feld im Tunnelheader, welches die Anzahl der enthaltenen Bestätigungen enthält, auf 1 gesetzt. Neben der Bestätigung des Tunnelpaketes X wird noch eine Zeitangabe t in den Tunnelheader geschrieben, die anzeigt, wieviel Zeit vom Empfang des Tunnelpaketes X bis zum Absenden des Paketes 90 vergangen ist. Mit anderen Worten sorgt die Tunnelsoftware 85 dafür, dass der Empfangszeitpunkt t1 und die Sendezeit t2, zu der das Tunnelpaket Y zum Fahrzeugserver 40 übertragen wird, gemessen und daraus die Zeitangabe t berechnet wird. Anschließend sorgt die Tunnelsoftware 85 dafür, dass der Management-Server 80 das Tunnelpaket Y über die IP-Verbindung zur Funk-Netzwerkkarte 41 des Servers 40 schickt, wie in Fig. 2 dargestellt. Das Tunnelpaket Y wird der Tunnelsoftware 44 übergeben, die den Empfangszeitpunkt tey des Tunnelpakets Y ermittelt und dafür sorgt, dass der Empfangszeitpunkt sowie die Zeitangabe t im Speicher 45 abgelegt und der Paketidentifizierung des Tunnelpakets X zugeordnet werden. Die von der Tunnelsoftware 85 berechnete Zeitangabe t kann auch Null sein, wenn der Empfangszeitpunkt t1 und der Sendezeitpunkt t2 zusammenfallen.

Um nun die Round-Trip-Time RTT hinsichtlich des Tunnelpaketes X ermitteln zu können, sucht die Tunnelsoftware 44 im Speicher 45 nach Informationen zur Paketidentifikation X. Im vorliegenden Beispiel findet die Tunnelsoftware 44 im Speicher 45 den Sendezeitpunkt tsx des Tunnelpakets X, den Empfangszeitpunkt tsy des Tunnelpaketes Y, in welchem die Bestätigung des Tunnelpaketes X enthalten ist, sowie die im Tunnelpaket Y enthaltene Zeitangabe t. Die Round-Trip-Time ergibt sich somit aus der Gleichung RTT = tsx-tey-t.

Auf diese Weise kann die Tunnelsoftware 44 die aktuelle Round-Trip-Time mittels jedes vom Server 40 gesendeten Tunnelpakets X ermitteln. Angemerkt sei, dass in ähnlicher Weise die Tunnelsoftware 85 des Management-Servers die Round-Trip-Time ermitteln kann, wenn der Management-Server 80 als Tunnelendpunkt 1 und der Fahrzeugserver 40 als Tunnelendpunkt 2 fungieren.

Wie bereits erwähnt, kann Tunnelsoftware 44 und/oder die Tunnelsoftware 85 die Qualität der IP-Verbindungen kontinuierlich überwachen. Hierzu muss sichergestellt werden, dass kontinuierlich Tunnelpakete zwischen der Tunnelsoftware 44 und der Tunnelsoftware 85 übertragen werden. Für den Fall, dass keine Nutzdaten verfügbar sind, können die Tunnelsoftware 44 und 85 Tunnelpakete mit den in Fig. 3 und 4 gezeigten Strukturen erzeugen, wobei anstelle von Nutzdaten Testdaten in die Tunnelpakete eingebettet werden. Mittels derartiger Test-Tunnelpakete kann ebenfalls in der zuvor geschilderten Weise die aktuelle Round-Trip-Time der IP-Verbindung ermittelt werden.

### b) Ermittlung des Paketverlustes

Die Tunnelsoftware 44 und/oder 85 kann den Paketverlust einer IP-Verbindung messen. Unter dem Paketverlust ist das Verhältnis von der Anzahl der bei der Übertragung über die IP-Verbindung fehlerhaft oder gar nicht übertragenen Pakete zur Anzahl der versendeten Pakete zu verstehen. Der Paketverlust kann nur für ein definiertes Zeitintervall, beispielsweise eine Minute, ermittelt werden. Weiterhin muss eine Timeout-Zeit definiert werden, nach der davon ausgegangen wird, dass ein Tunnelpaket verlorengegangen ist, falls keine Bestätigung innerhalb dieser Zeit eingetroffen ist. Die Timeout-Zeit kann 10 Sekunden betragen.

Angenommen sei nunmehr, dass im Speicher 45 eine Liste von Paketidentifizierungen für Tunnelpakete, die vom Server 40 zum Management-Server 80 übertragen worden sind, gespeichert ist. In der zuvor geschilderten Weise hat die Tunnelsoftware 44 dafür gesorgt, dass zu jeder Paketidentifizierung die Sendezeit des Tunnelpakets X und die Empfangszeit, zu der das Tunnelpaket Y, in dem die Bestätigung des jeweiligen Tunnelpakets X enthalten ist, am Fahrzeugserver 40 empfangenen wurde, im Speicher 45 abgelegt. Gegebenenfalls wird zusätzlich noch eine Zeitangabe t gespeichert, wenn die im Management-Server 80 ermittelte zeitliche Differenz zwischen der Empfangszeit t1 des jeweiligen Tunnelpakets X und der Sendezeit t2 des jeweiligen Tunnelpakets Y, wie in Fig. 2 gezeigt, nicht Null ist. Im vorliegenden Beispiel wird die Messung des Paketverlustes nur in Verbindung mit der Tunnelsoftware 44 beschrieben.

Die Tunnelsoftware 44 sorgt nunmehr dafür, dass in regelmäßigen Abständen, beispielsweise jede Minute, der Speicher 45 nach Paketen durchsucht wird, deren Absendezeiten innerhalb des zu messenden Zeitraums liegen. Weiterhin prüft die Tunnelsoftware 44, ob für die aufgefundenen Pakete eine Bestätigung innerhalb der Time-Out-Zeit eingetroffen ist. Hierzu ermittelt die Tunnelsoftware nach dem zuvor beschriebenen Verfahren die Round-Trip-Time hinsichtlich der gefundenen Pakete und prüft für jedes gesendete Tunnelpaket, ob die gemessene Round-Trip-Time größer als die Timeout-Zeit ist oder eine Bestätigung völlig ausgeblieben ist. Die Vorgehensweise zur Berechnung des Paketverlustes wird anhand des folgenden Beispiels näher erläutert. Als Time-Out-Zeitspanne wird 10 Sekunden angesetzt, die Bestimmung des Paketverlustes soll jede Minute durchgeführt werden. Angenommen sei, dass die letzte Bestimmung des Paketverlustes um 10:37:00 stattgefunden habe. Um 10:38:00 liegen nun folgende Listen mit Paketinformationen im Speicher 45 vor.

| Paketnummer | Versendet um | Bestätigung eingetroffen? |
|---|---|---|
| 1 | 10:36:55 | Ja |
| 2 | 10:37:09 | Ja |
| 3 | 10:37:26 | Nein |
| 4 | 10:37:45 | Ja |
| 5 | 10:37:53 | Nein |

Tunnelpaket 5 kann nicht zur Berechnung des Paketverlustes mitgezählt werden, da seit dem Zeitpunkt des Versendens und dem Zeitpunkt der Auswertung erst sieben Sekunden vergangen sind. Bei einer Timeout-Zeit von zehn Sekunden ist es jedoch möglich, dass die Bestätigung für das Paket 5 noch eintrifft. Somit werden von der Tunnelsoftware 44 während der Messzeit von einer Minute vier Pakete gezählt, wovon Tunnelpaket 3 als verlorengegangen gilt. Denn die Bestätigung für das Tunnelpaket 3 ist gar nicht oder erst später als 10 Sekunden nach dem Absenden eingetroffen. Der Paketverlust für den betrachteten Zeitraum beträgt somit 25%. Anschließend werden die Informationen über die Pakete 1 bis 4 aus dem Speicher 45 gelöscht. Die Information über das Paket 5 bleibt im Speicher 45 gespeichert, da sie für die nächste Messung von Paketverlusten benötigt wird.

Angemerkt sei, dass der Paketverlust der IP-Verbindung in ähnlicher Weise auch von der Tunnelsoftware 85 ermittelt werden kann.

### c) Ermittlung der maximal verfügbaren Bitrate einer IP-Verbindung

Angemerkt sei an dieser Stelle, dass zur Steuerung der Kommunikation zwischen dem Fahrzeugserver 40 und dem Management-Server 80 im vorliegenden Beispiel das Internet-Protokoll (IP) auf der Schicht 3 und das User Datagram Protocol (UDP) auf Schicht 4 des OSI-Schichtensystems implementiert ist. Mit dem User Datagram Protocol kann jedoch keine Überlastungskontrolle der IP-Verbindung durchgeführt werden. Diese Aufgabe übernimmt deshalb die Tunnelsoftware 44 und/oder 85. Im vorliegenden Beispiel ermittele die Tunnelsoftware 44 die maximale Bitrate.

Um die maximal verfügbare Bandbreite oder Bitrate einer IP-Verbindung zwischen dem Server 40 und dem Management-Server 80 ermitteln zu können, wird zunächst die minimale Round-Trip-Time ermittelt. Beispielsweise erzeugt die Tunnelsoftware 44 vor der eigentlichen Nutzdatenübertragung ein Tunnelpaket X mit Testdaten und sendet dieses Paket zum Management-Server 80. In einem Tunnelpaket Y sendet dann die Tunnelsoftware 85 die Bestätigung des Tunnelpakets X und gegebenenfalls eine Zeitangabe t zum Fahrzeugserver 40 zurück. In der in Verbindung mit Fig. 2 beschriebenen Weise ermittelt die Tunnelsoftware 44 die Round-Trip-Time für das Tunnelpaket X. Die ermittelte Round-Trip-Time wird als minimale Round-Trip-Time angesehen, wenn sie kleiner oder gleich einer definierten Round-Trip-Time ist. Für vorbestimmte Tunnelpakete kann auf ähnliche Weise die Round-Trip-Time von der Tunnelsoftware 44 ermittelt werden. Liegt die jeweils ermittelte Round-Trip-Time unterhalb der zuvor bestimmten minimalen Round-Trip-Zeit, wird der gespeicherte Wert der minimalen Round-Trip-Time durch den neuen Wert ersetzt.

Weiterhin berücksichtigt die Tunnelsoftware 44 einen definierten maximalen Schwellenwert.

Die Tunnelsoftware 44 beginnt nun Tunnelpakete, die vorzugsweise Nutzdaten enthalten, mit einer definierten Übertragungsrate zum Management-Server 80 zu übertragen.

Mithilfe vorbestimmter Tunnelpakete ermittelt die Tunnelsoftware 44 in der beschriebenen Weise die aktuelle Round-Trip-Time und vergleicht diese mit dem maximalen Schwellenwert. Ist die aktuelle Round-Trip-Time größer als die minimale Round-Trip-Time aber kleiner als der maximale Schwellenwert, wird die Übertragungsrate erhöht. Für den Fall, dass nicht genügend Nutzdaten verfügbar sind, erzeugt die Tunnelsoftware 44 Tunnelpakete mit Testdaten. Dieser Ablauf wird solange wiederholt, bis die Tunnelsoftware 44 feststellt, dass die aktuelle Round-Trip-Time gleich oder im Wesentlichen gleich dem vorgegebenen maximalen Schwellenwert ist. Die Übertragungsrate, mit der Tunnelpakete zu diesem Zeitpunkt übertragen worden sind, entspricht dann der maximal verfügbaren Bitrate der jeweils überwachten IP-Verbindung.

Die Geschwindigkeit, mit der die Senderate zum Übertragen von Tunnelpaketen geändert wird, kann von der zeitlichen Differenz zwischen der aktuell gemessenen Round-Trip-Time und dem maximalen Schwellenwert abhängen.

Unter Ansprechen auf die ermittelte aktuelle Round-Trip-Time, den Paketverlust und die maximale Bitrate kann die Tunnelsoftware 44 und/oder die Tunnelsoftware 85 die Qualität der IP-Verbindungen ermitteln und anschließenden diejenige IP-Verbindung auszuwählen, die die höchste Qualität besitzt. Je höher die maximal verfügbare Bitrate und je niedriger der Paketverlust und die Round-Trip-Time hinsichtlich einer IP-Verbindung sind, desto höher ist Qualität der jeweiligen IP-Verbindung.

### Folgende Tunnelpakettypen können erzeugt werden:

**Connect-Paket:** Ein solches Tunnelpaket wird von einem Tunnelendpunkt (Fahrzeug 10 oder Server 80) verschickt, um eine IP-Verbindung zu einem anderen Tunnelendpunkt (Server 80 oder Fahrzeug 10) aufzubauen. Ein solches Tunnelpaket enthält keine Nutzdaten.

### Antwort auf Connect-Paket:

Ein Tunnelendpunkt muss auf ein Connect-Paket mit einem "Antwort auf Connect-Paket" antworten. Wenn das "Antwort auf Connect-Paket" am anderen Tunnelendpunkt angekommen ist, ist die Verbindung aufgebaut. In dem "Antwort auf Connect-Paket" werden keine Nutzdaten übertragen.

### Nutzdatenpaket:

Nutzerdaten, die für die Nutzer 30, 35 des Fahrzeugs 10 bestimmt sind oder von diesen verschickt werden, werden im Nutzdatenfeld der Nutzdatenpakete übertragen. Diese Pakete können Bestätigungen, Zeitangaben und Qualitätsparameter enthalten.

### Pakete mit komprimierten Nutzerdaten:

Nutzerdaten können in komprimierter Form übertragen und am Empfänger wieder dekomprimiert werden. Auf diese Art und Weise lässt sich die Menge der zu übertragenden Daten reduzieren.

### Testdatenpakete, für die eine Bestätigung angefordert wird:

Zum Messen der maximal verfügbaren Bitrate müssen Testdatenpakete erzeugt werden, wenn keine Nutzdaten zum Senden verfügbar sind. Diese Testdatenpakete verlangen, dass der Empfänger eine Bestätigung zurück sendet. Jedoch verlangt nicht jedes Testdatenpaket eine Bestätigung. Solche Pakete nennt man deshalb
Testdaten, für die keine Bestätigung angefordert wird.

### Bestätigungspaket:

Sowohl Nutzerdaten- als auch Testdatenpakete können jeweils eine oder mehrere Bestätigungen vorhergehender Tunnelpakete enthalten.

### Testdaten-Stopp-Paket:

Im Laufe der Übertragung von Testdatenpaketen kann es aus verschiedenen Gründen notwendig sein, das Versenden von Testdaten auszusetzen. Falls das Versenden von Testdaten ausgesetzt wird, muss der empfangende Tunnelendpunkt darüber informiert werden. Ansonsten würde der empfangende Tunnelendpunkt fälschlicherweise davon ausgehen, das$ das Netzwerk im Moment nicht in der Lage ist, Daten zu übertragen, da keine Testdaten mehr eintreffen. Um dies zu verhindern, kann ein Tunnelendpunkt ein Testdaten-Stopp-Paket abschicken. Der empfangende Tunnelendpunkt weiß dadurch, dass keine Testdaten mehr verschickt werden. Ab wann der sendende Tunnelendpunkt wieder Testdaten verschickt, erkennt der empfangende Tunnelendpunkt am Eintreffen des nächsten Pakets mit Testdaten.

### Keep Alive Request-Paket:

Falls für längere Zeit keine Pakete zwischen den Tunnelendpunkten übertragen werden, muss überprüft werden, ob die Verbindung zwischen den Tunnelendpunkten noch besteht. Dazu können beide Tunnelendpunkte ein Keep Alive Request-Paket abschicken. Empfängt ein Tunnelendpunkt ein Keep Alive Request-Paket, muss er ein Keep Alive Response-Paket senden.

### Sende-Testdaten-Token-Paket:

Die maximal verfügbare Bandbreite einer IP-Verbindung kann nur in einer Richtung zu einer Zeit ermittelt werden. Wenn die maximal verfügbare Bandbreite in beiden Übertragungsrichtungen ermittelt werden soll, so erfolgt die Messung in beiden Richtungen separat.
Wenn daher beide Tunnelendpunkte Testdaten verschicken wollen, muss ein Recht vergeben werden, welcher Tunnelendpunkt aktuell Testdaten zum Ermitteln der maximal verfügbaren Bandbreite verschicken darf und welcher nicht. Dazu dient ein sogenanntes Token. Derjenige Tunnelendpunkt, der aktuell das Token besitzt darf Testdaten verschicken. Nach einer bestimmten Zeit muss der Tunnelendpunkt dieses Recht abgeben und dazu das Token versenden. Erhält ein Tunnelendpunkt das Token, muss er den Empfang des Tokens bestätigen in einem entsprechenden Paket bestätigen.

## Patentansprüche

1. Verfahren zum Bestimmen der Qualität wenigstens einer IP-Verbindung zwischen einer mobilen Einrichtung (10) und einem mit einem öffentlichen IP-basierten Kommunikationsnetz (70) verbundenen Server (80), wobei die IP-Verbindung abschnittsweise über eine Funkverbindung eines Mobilfunknetzes (50, 60) verläuft, über welches die mobile Einrichtung (10) am öffentlichen IP-basierten Kommunikationsnetz (70) angebunden wird, mit folgenden Schritten:
a) Herstellen wenigstens einer IP-Verbindung zwischen der mobilen Einrichtung (10) und dem Server (80);
b) unter Anwendung einer vorbestimmten Tunnelsoftware (44, 85) Aufbauen einer Tunnelverbindung über die IP-Verbindung;
c) Austauschen von IP-basierten Tunnelpaketen über die Tunnelverbindung unter Steuerung des User Datagram Protokolls;
d) Ermitteln durch die vorbestimmte Tunnelsoftware, an der mobilen Einrichtung (10) und/oder dem Server (80), auf Basis einer Pakethistorie gesendeter und empfangener Tunnelpakete, von Qualitätsparametern, die die maximal verfügbare Bitrate, die Round-Trip-Time und ein Maß für den Paketverlust hinsichtlich der IP-Verbindung darstellen;
e) Bestimmen der Qualität der IP-Verbindung in Abhängigkeit von den Qualitätsparametern durch die vorbestimmte Tunnelsoftware,
**dadurch gekennzeichnet, dass**
die Qualität der IP-Verbindung durch die vorbestimmte Tunnelsoftware kontinuierlich überwacht wird, wofür Nutzdaten in die Tunnelpakete eingebettet werden, sobald Nutzdaten in der mobilen Einrichtung (10) bzw. im Server (80) zur Übertragung verfügbar sind, und für den Fall, dass keine Nutzdaten verfügbar sind, anstelle von Nutzdaten Testdaten in die Tunnelpakete eingebettet werden.

2. Verfahren nach Anspruch 1,
**dadurch gekennzeichnet, dass**
Schritt c) folgende Schritte umfasst:
Speichern der Sendezeit und der Paketidentifikation eines ersten Tunnelpakets in der mobilen Einrichtung (10) ;
Übertragen des ersten Tunnelpakets zum Server (80);
Speichern der Empfangszeit des empfangenen ersten Tunnelpakets im Server (80) ;
Übertragen eines zweiten Tunnelpakets vom Server (80) zur mobilen Einrichtung (10), welches wenigstens eine Empfangsbestätigung des ersten Tunnelpakets und eine Zeitangabe enthält, die die zeitliche Differenz zwischen der Empfangszeit des ersten Tunnelpakets und der Sendezeit des zweiten Tunnelpakets darstellt;
Speichern der in dem empfangenen zweiten Tunnelpaket enthaltenen Empfangsbestätigung und der dazugehörenden Zeitangabe sowie der Empfangszeit des empfangenen zweiten Tunnelpakets in der mobilen Einrichtung (10).

3. Verfahren nach Anspruch 2,
**dadurch gekennzeichnet, dass**
in Schritt d) in Abhängigkeit von der Sendezeit des ersten Tunnelpakets, der Empfangszeit der Empfangsbestätigung des ersten Tunnelpakets und der entsprechenden Zeitangabe die Round-Trip-Time in der mobilen Einrichtung (10) ermittelt wird.

4. Verfahren nach einem der vorhergehenden Ansprüche, **dadurch gekennzeichnet, dass**
Schritt c) folgende Schritte umfasst:
Speichern der Sendezeit und der Paketidentifikation eines dritten Tunnelpakets im Server (80);
Übertragen des dritten Tunnelpakets zur mobilen Einrichtung (10);
Speichern der Empfangszeit des empfangenen dritten Tunnelpakets in der mobilen Einrichtung (10);
Übertragen eines vierten Tunnelpakets von der mobilen Einrichtung (10) zum Server (80), welches wenigstens eine Empfangsbestätigung des dritten Tunnelpakets und eine Zeitangabe enthält, die die zeitliche Differenz zwischen der Empfangszeit des dritten Tunnelpakets und der Sendezeit des vierten Tunnelpakets darstellt;
Speichern der in dem empfangenen vierten Tunnelpaket enthaltenen Empfangsbestätigung und der dazugehörenden Zeitangabe sowie der Empfangszeit des empfangenen dritten Tunnelpakets im Server (80).

5. Verfahren nach Anspruch 4,
**dadurch gekennzeichnet, dass**
in Schritt d) in Abhängigkeit von der Sendezeit des dritten Tunnelpakets, der Empfangszeit der Empfangsbestätigung des dritten Tunnelpakets und der entsprechenden Zeitangabe die Round-Trip-Time im Server (80) ermittelt wird.

6. Verfahren nach einem der vorhergehenden Ansprüche,
**dadurch gekennzeichnet, dass**
die maximal verfügbare Bitrate der IP-Verbindung dadurch ermittelt wird, dass die minimale Round-Trip-Time ermittelt wird, und dass die Anzahl von übertragenen Tunnelpaketen pro Zeiteinheit solange verändert wird, bis die aktuell gemessene Round-Trip-Time gleich oder im Wesentlichen gleich einem vorgegebenen Schwellenwert ist, wobei die Anzahl pro Zeiteinheit übertragener Tunnelpakete ein Maß für die verfügbare Bitrate der IP-Verbindung ist.

7. Verfahren nach einem der Ansprüche 4 bis 6,
**dadurch gekennzeichnet, dass**
in Schritt d) zur Ermittlung des Paketverlusts in der mobilen Einrichtung (10) innerhalb eines vorbestimmten Zeitintervalls die Anzahl von ersten Paketen ermittelt wird, deren Empfangsbestätigungen nicht innerhalb einer vorbestimmten Zeitspanne vom Server (80) empfangen worden sind.

8. Verfahren nach einem der Ansprüche 4 bis 7,
**dadurch gekennzeichnet, dass**
in Schritt d) zur Ermittlung des Paketverlusts im Server (80) innerhalb eines vorbestimmten Zeitintervalls die Anzahl von dritten Paketen ermittelt wird, deren Empfangsbestätigungen nicht innerhalb einer vorbestimmten Zeitspanne von der mobilen Einrichtung (10) empfangen worden sind.

9. Verfahren nach einem der vorhergehenden Ansprüche,
**dadurch gekennzeichnet, dass**
die Auslastung der IP-Verbindung ermittelt wird und dass in Abhängigkeit vom Grad der Auslastung Tunnelpakete mit Testdaten übertragen werden, wobei Tunnelpakete mit Testdaten erzeugt werden, sobald die Menge an zu übertragenden Nutzdaten nicht ausreicht, die IP-Verbindung maximal auszulasten.

10. Verfahren nach einem der vorhergehenden Ansprüche,
**dadurch gekennzeichnet, dass**
die Qualitätsparameter zwischen der mobilen Einrichtung (10) und dem Server (80) ausgetauscht werden.

11. Verfahren nach einem der vorhergehenden Ansprüche,
**dadurch gekennzeichnet, dass**
in einem vom Server (80) gesendeten zweiten Tunnelpaket und/oder in einem von der mobilen Einrichtung (10) gesendeten vierten Tunnelpaket die Empfangsbestätigung und die Zeitangabe hinsichtlich mehrerer erster bzw. dritter Tunnelpakete enthalten sind.

12. Verfahren nach einem der vorhergehenden Ansprüche,
**dadurch gekennzeichnet, dass**
die Qualitätsparameter mehrerer IP-Verbindungen zwischen der mobilen Einrichtung (10) und dem Server (80) bestimmt werden, wobei die mobile Einrichtung über verschiedene Mobilfunknetze (50, 60) an dem IP-basierten Kommunikationsnetz (70) angebunden ist, und dass diejenige IP-Verbindung, die die höchste Qualität aufweist, zur Übertragung von IP-Pakete zwischen der mobilen Einrichtung (10) und dem Server (80) ausgewählt wird.

13. Kommunikationssystem zum Bestimmen der Qualität wenigstens einer IP-Verbindung zwischen einer mobilen Einrichtung (10) und einem mit einem öffentlichen IP-basierten Kommunikationsnetz (70) verbundenen Server (80), umfassend:
wenigstens eine mobile Einrichtung (10), die wenigstens eine Netz-Funkschnittstelle (41, 42, 43) zur Kommunikation mit dem Mobilfunknetz aufweist, wenigstens ein Mobilfunknetz (50, 60), über das die mobile Einrichtung (10) mit einem öffentlichen IP-basierten IP-Kommunikationsnetz (70) verbindbar ist, und einen mit dem IP-basierten Kommunikationsnetz (70) verbundenen, Netzwerktunnel-fähigen Server (80), wobei die mobile Einrichtung (10) und/oder der Server (80) jeweils einen programmierbaren Mikroprozessor aufweist, der unter Ansprechen auf eine Tunnelsoftware das Herstellen einer Tunnelverbindung zum Server (80) bzw. zur mobilen Einrichtung (10) steuert, dazu ausgebildet ist, Tunnelpakete über eine hergestellte Tunnelverbindung zu senden und zu empfangen, und der dazu ausgebildet ist, auf Basis einer Pakethistorie gesendeter und empfangener Tunnelpakete Qualitätsparameter, die die maximal verfügbare Bitrate, die Round-Trip-Time und ein Maß für den Paketverlust hinsichtlich der IP-Verbindung darstellen, sowie in Abhängigkeit von den Qualitätsparametern die Qualität der IP-Verbindung zu bestimmen, **dadurch gekennzeichnet, dass** die Tunnelsoftware dazu ausgebildet ist, die Qualität der IP-Verbindung kontinuierlich zu überwachen, wobei die Tunnelsoftware dazu ausgebildet ist, Tunnelpakete derart zu erzeugen, dass Nutzdaten in die Tunnelpakete eingebettet werden, sobald Nutzdaten in der mobilen Einrichtung (10) bzw. im Server (80) zur Übertragung verfügbar sind, und wobei für den Fall, dass keine Nutzdaten verfügbar sind, anstelle von Nutzdaten Testdaten in die Tunnelpakete eingebettet werden.

14. Kommunikationssystem nach Anspruch 13,
**dadurch gekennzeichnet, dass**
die mobile Einrichtung (10) einen Speicher (45) zum Speichern der Sendezeit und der Paketidentifikation eines gesendeten ersten Tunnelpakets und zum Speichern der in einem vom Server gesendeten zweiten Tunnelpaket enthaltenen Empfangszeit der Empfangsbestätigung des ersten Tunnelpakets und einer Zeitangabe, welche die zeitliche Differenz zwischen der Empfangszeit des ersten Tunnelpakets und der Sendezeit des zweiten Tunnelpakets darstellt, aufweist, und dass der Mikroprozessor die Round-Trip-Time und/oder die maximale Bitrate der IP-Verbindung und/oder die Anzahl verlorengegangener Tunnelpakete ermitteln kann.

## Claims

1. A method for determining the quality of at least one IP connection between a mobile device (10) and a server (80) connected to a public IP based communication network (70), wherein sections of the IP connection are provided via a wireless connection of a mobile communication network (50, 60) through which the mobile device (10) is connected to the public IP based communication network (70), comprising the steps of:
a) establishing at least one IP connection between the mobile device (10) and the server (80);
b) establishing a tunnel connection via the IP connection using a predefined tunnel software (44, 85);
c) exchanging IP based tunnel packets via the tunnel connection under control of the User Datagram Protocol;
d) determining, by the predefined tunnel software at the mobile device (10) and/or the server (80) and based on a packet history of the transmitted and received tunnel packets, quality parameters representing the maximum available bit rate, the round-trip time, and a measure for the packet loss with respect to the IP connection;
e) determining, by the predefined tunnel software, the quality of the IP connection based on the quality parameters;
**characterized in that**
the quality of the IP connection is continuously monitored by the predefined tunnel software, for which purpose payload data are embedded into the tunnel packets when payload data are available for transmission in the mobile device (10) or in the server (80), and in case that no payload data are available, test data are embedded into the tunnel packets instead of payload data.

2. The method according to claim 1, **characterized in that** step c) comprises the steps of:
storing the transmission time and the packet ID of a first tunnel packet in the mobile device (10);
transmitting the first tunnel packet to the server (80);
storing the reception time of the received first tunnel packet in the server (80);
transmitting a second tunnel packet from the server (80) to the mobile device (10), which packet contains at least an acknowledgment of receipt of the first tunnel packet and a time information representing the time difference between the reception time of the first tunnel packet and the transmission time of the second tunnel packet;
storing the acknowledgment of receipt and the associated time information contained in the received second tunnel packet and the reception time of the received second tunnel packet in the mobile device (10).

3. The method according to claim 2, **characterized in that** in step d) the round-trip time is determined in the mobile device (10) based on the transmission time of the first tunnel packet, the reception time of the acknowledgment of receipt of the first tunnel packet, and the corresponding time information.

4. The method according to any of the preceding claims, **characterized in that**
step c) comprises the steps of:
storing the transmission time and the packet ID of a third tunnel packet in the server (80);
transmitting the third tunnel packet to the mobile device (10);
storing the reception time of the received third tunnel packet in the mobile device (10);
transmitting a fourth tunnel packet from the mobile device (10) to the server (80), which packet contains at least an acknowledgment of receipt of the third tunnel packet and a time information representing the time difference between the reception time of the third tunnel packet and the transmitting time of the fourth tunnel packet;
storing the acknowledgment of receipt and the associated time information contained in the received fourth tunnel packet and the reception time of the received third tunnel packet in the server (80).

5. The method according to claim 4, **characterized in that** in step d) the round-trip time is determined in the server (80) based on the transmission time of the third tunnel packet, the reception time of the acknowledgment of receipt of the third tunnel packet, and the corresponding time information.

6. The method according to any of the preceding claims, **characterized in that** the maximum available bit rate of the IP connection is determined by determining the minimum round-trip time and by changing the number of transmitted tunnel packets per unit time until the currently measured round-trip time is equal to or substantially equal to a predefined threshold, wherein the number of tunnel packets transmitted per unit time is a measure for the available bit rate of the IP connection.

7. The method according to any of claims 4 to 6, **characterized in that**
step d) comprises, for detecting the packet loss in the mobile device (10) within a predefined time interval, determining the number of first packets whose acknowledgments of receipt have not been received from the server (80) within a predefined time period.

8. The method according to any of claims 4 to 7, **characterized in that**
step d) comprises, for detecting the packet loss in the server (80) within a predefined time interval, determining the number of third packets whose acknowledgments of receipt have not been received from the mobile device (10) within a predefined time period.

9. The method according to any of the preceding claims, **characterized in that** the utilization of the IP connection is determined, and that depending on the degree of utilization tunnel packets including test data are transmitted, wherein tunnel packets including test data are generated as soon as the amount of payload data to be transmitted is not sufficient to utilize the maximum capacity of the IP connection.

10. The method according to any of the preceding claims, **characterized in that** the quality parameters are exchanged between the mobile device (10) and the server (80).

11. The method according to any of the preceding claims, **characterized in that** a second tunnel packet transmitted by the server (80) and/or a fourth tunnel packet transmitted by the mobile device (10) include the acknowledgment of receipt and the time information with respect to a plurality of first and third tunnel packets.

12. The method according to any of the preceding claims, **characterized in that** the quality parameters of a plurality of IP connections between the mobile device (10) and the server (80) are determined, the mobile device being connected to the IP based communication network (70) via different wireless communication networks (50, 60), and that the IP connection that has the highest quality is selected for the transmission of IP packets between the mobile device (10) and the server (80).

13. A communication system for determining the quality of at least one IP connection between a mobile device (10) and a server (80) connected to a public IP based communication network (70), comprising:
at least one mobile device (10) which has at least one wireless network interface (41, 42, 43) for communication with the mobile communication network;
at least one mobile communication network (50, 60) through which the mobile device (10) is connectable to a public IP based communication network (70); and
a network tunnel enabled server (80) connected to the IP based communication network (70); wherein
the mobile device (10) and/or the server (80) each comprise a programmable microprocessor which in response to a tunnel software controls the establishing of a tunnel connection to the server (80) or to the mobile device (10), respectively, adapted to transmit and to receive tunnel packets via an established tunnel connection, and adapted, based on a packet history of transmitted and received tunnel packets, to determine quality parameters representing the maximum available bit rate, the round-trip time, and a measure for the packet loss with respect to the IP connection, and to determine the quality of the IP connection based on the quality parameters; **characterized in that** the tunnel software is adapted to continuously monitor the quality of the IP connection, wherein the tunnel software is adapted to generate tunnel packets in such a manner that payload data are embedded into the tunnel packets when payload data are available for transmission in the mobile device (10) or in the server (80), respectively, and wherein in the case that no payload data are available, test data are embedded into the tunnel packets instead of payload data.

14. The communication system according to claim 13, **characterized in that** the mobile device (10) has a memory (45) for storing the transmission time and the packet ID of a transmitted first tunnel packet and for storing the reception time from the acknowledgment of receipt of the first tunnel packet included in the second tunnel packet transmitted from the server, and a time information representing the time difference between the reception time of the first tunnel packet and the transmission time of the second tunnel packet, and **in that** the microprocessor is capable to determine the round-trip time and/or maximum bit rate of the IP connection and/or the number of lost tunnel packets.

## Revendications

1. Procédé de détermination de la qualité d'au moins une connexion IP entre un dispositif mobile (10) et un serveur (80) relié à un réseau de communication (70) public basé IP, la connexion IP s'effectuant partiellement via une liaison de radiocommunication d'un réseau de téléphonie mobile (50, 60) par lequel le dispositif mobile (10) est raccordé au réseau de communication (70) public basé IP, comprenant les étapes suivantes :
a) établissement d'au moins une connexion IP entre le dispositif mobile (10) et le serveur (80) ;
b) en recourant à un logiciel tunnel (44, 85) prédéfini, établissement d'une connexion tunnel via la connexion IP ;
c) communication de paquets tunnel basés IP via la connexion tunnel par commande du protocole de datagramme utilisateur ;
d) détermination par le logiciel tunnel prédéfini sur le dispositif mobile (10) et/ou le serveur (80), sur la base d'un historique des paquets tunnel émis et reçus, de paramètres de qualité exprimant le débit binaire maximal disponible, le temps d'aller-retour et une mesure pour la perte de paquets concernant la connexion IP ;
e) détermination par le logiciel tunnel prédéfini de la qualité de la connexion IP en fonction des paramètres de qualité,
**caractérisé en ce que** :
la qualité de la connexion IP est surveillée de manière continue par le logiciel tunnel prédéfini, des données utiles étant incorporées aux paquets tunnel à cet effet, dès que des données utiles sont disponibles pour transmission dans le dispositif mobile (10) ou dans le serveur (80), et, dans le cas où des données utiles ne sont pas disponibles, des données de test sont incorporées aux paquets tunnel.

2. Procédé selon la revendication 1, **caractérisé en ce que** l'étape c) comprend les étapes suivantes :
mémorisation du temps d'émission et de l'identification de paquet d'un premier paquet tunnel dans le dispositif mobile (10) ;
transmission du premier paquet tunnel au serveur (80) ;
mémorisation du temps de réception du premier paquet tunnel reçu dans le serveur (80) ;
transmission d'un deuxième paquet tunnel du serveur (80) au dispositif mobile (10), lequel contient au moins un accusé de réception du premier paquet tunnel et une indication temporelle exprimant la différence temporelle entre le temps de réception du premier paquet tunnel et le temps d'émission du deuxième paquet tunnel ;
mémorisation de l'accusé de réception contenu dans le deuxième paquet tunnel reçu et de l'indication temporelle associée ainsi que du temps de réception du deuxième paquet tunnel reçu dans le dispositif mobile (10).

3. Procédé selon la revendication 2, **caractérisé en ce que**, en étape d), le temps d'aller-retour est déterminé dans le dispositif mobile (10) en fonction du temps d'émission du premier paquet tunnel, du temps de réception de l'accusé de réception du premier paquet tunnel et de l'indication temporelle correspondante.

4. Procédé selon l'une des revendications précédentes, **caractérisé en ce que** l'étape c) comprend les étapes suivantes :
mémorisation du temps d'émission et de l'identification de paquet d'un troisième paquet tunnel dans le serveur (80) ;
transmission du troisième paquet tunnel au dispositif mobile (10) ;
mémorisation du temps de réception du troisième paquet tunnel reçu dans le dispositif mobile (10) ;
transmission d'un quatrième paquet tunnel du dispositif mobile (10) au serveur (80), lequel contient au moins un accusé de réception du troisième paquet tunnel et une indication temporelle exprimant la différence temporelle entre le temps de réception du troisième paquet tunnel et le temps d'émission du quatrième paquet tunnel ;
mémorisation de l'accusé de réception contenu dans le quatrième paquet tunnel reçu et de l'indication temporelle associée ainsi que du temps de réception du troisième paquet tunnel reçu dans le serveur (80).

5. Procédé selon la revendication 4, **caractérisé en ce que**, en étape d), le temps d'aller-retour est déterminé dans le serveur (80) en fonction du temps d'émission du troisième paquet tunnel, du temps de réception de l'accusé de réception du troisième paquet tunnel et de l'indication temporelle correspondante.

6. Procédé selon l'une des revendications précédentes, **caractérisé en ce que** le débit binaire maximal disponible de la connexion IP est déterminé par détermination du temps d'aller-retour minimal, et **en ce que** le nombre de paquets tunnel transmis par unité temporelle est modifié jusqu'à ce que le temps d'aller-retour actuellement mesuré soit égal ou sensiblement égal à une valeur limite donnée, le nombre de paquets tunnel transmis par unité temporelle étant une mesure pour le débit binaire disponible de la connexion IP.

7. Procédé selon l'une des revendications 4 à 6, **caractérisé en ce que**, en étape d), le nombre de premiers paquets dont les accusés de réception n'ont pas été reçus par le serveur (80) pendant un laps de temps prédéfini est déterminé pour la détermination de la perte de paquets dans le dispositif mobile (10) pendant un intervalle temporel prédéfini.

8. Procédé selon l'une des revendications 4 à 7, **caractérisé en ce que**, en étape d), le nombre de troisièmes paquets dont les accusés de réception n'ont pas été reçus par le dispositif mobile (10) pendant un laps de temps prédéfini est déterminé pour la détermination de la perte de paquets dans le serveur (80) pendant un intervalle temporel prédéfini.

9. Procédé selon l'une des revendications précédentes, **caractérisé en ce que** l'état de charge de la connexion IP est déterminé et **en ce que** des paquets tunnel sont transmis avec des données de test en fonction du niveau de la charge, des paquets tunnel étant générés avec des données de test dès que la quantité des données utiles à transmettre est insuffisante pour charger au maximum la connexion IP.

10. Procédé selon l'une des revendications précédentes, **caractérisé en ce que** les paramètres de qualité sont communiqués entre le dispositif mobile (10) et le serveur (80).

11. Procédé selon l'une des revendications précédentes, **caractérisé en ce que** l'accusé de réception et l'indication temporelle concernant plusieurs premiers ou troisièmes paquets tunnel sont contenus dans un deuxième paquet tunnel émis par un serveur (80) et/ou dans un quatrième paquet tunnel émis par le dispositif mobile (10).

12. Procédé selon l'une des revendications précédentes, **caractérisé en ce que** les paramètres de qualité de plusieurs connexions IP entre le dispositif mobile (10) et le serveur (80) sont déterminés, le dispositif mobile étant relié au réseau de communication (70) basé IP via différents réseaux de téléphonie mobile (50, 60), et **en ce que** la connexion IP qui présente la qualité maximale est sélectionnée pour la transmission de paquets IP entre le dispositif mobile (10) et le serveur (80).

13. Système de communication pour la détermination de la qualité d'au moins une connexion IP entre un dispositif mobile (10) et un serveur (80) relié à un réseau de communication (70) public basé IP, comprenant :
au moins un dispositif mobile (10) comportant au moins une interface radio de réseau (41, 42, 43) pour la communication avec le réseau de téléphonie mobile, au moins un réseau de téléphonie mobile (50, 60) par l'intermédiaire duquel le dispositif mobile (10) peut être relié à un réseau de communication (70) public basé IP, et un serveur (80) compatible tunnel réseau relié au réseau de communication (70) basé IP, le dispositif mobile (10) et/ou le serveur (80) comportant chacun un microprocesseur programmable, lequel commande en réaction à un logiciel tunnel l'établissement d'une connexion tunnel au serveur (80) ou au dispositif mobile (10), prévu pour émettre et recevoir des paquets tunnel via une connexion tunnel établie, et prévu pour déterminer, sur la base d'un historique des paquets tunnel émis et reçus, des paramètres de qualité exprimant le débit binaire maximal disponible, le temps d'aller-retour et une mesure pour la perte de paquets concernant la connexion IP, ainsi que la qualité de la connexion IP en fonction des paramètres de qualité, **caractérisé en ce que** le logiciel tunnel est prévu pour générer des paquets tunnel de telle manière que des données utiles sont incorporées aux paquets tunnel, dès que des données utiles sont disponibles pour transmission dans le dispositif mobile (10) ou dans le serveur (80), et, dans le cas où des données utiles ne sont pas disponibles, des données de test sont incorporées aux paquets tunnel.

14. Système de communication selon la revendication 13, **caractérisé en ce que** le dispositif mobile (10) est pourvu d'une mémoire (45) pour la mémorisation du temps d'émission et de l'identification de paquet d'un premier paquet tunnel émis et pour la mémorisation du temps de réception, contenu dans un deuxième paquet tunnel émis par le serveur, de l'accusé de réception du premier paquet tunnel et d'une indication temporelle exprimant la différence temporelle entre le temps de réception du premier paquet tunnel et le temps d'émission du deuxième paquet tunnel, et **en ce que** le microprocesseur peut déterminer le temps d'aller-retour et/ou le débit binaire maximal de la connexion IP et/ou le nombre de paquets tunnel perdus.
